# EUROPEAN PATENT APPLICATION

(11) **EP 3 654 228 A1**
(43) Date of publication of application: **20.05.2020**
(21) Application number: 18206942.7
(22) Date of filing: 19.11.2018
(51) Int. Cl.: G06K 7/10

(54) **SEQUENTIAL DUAL PROTOCOL RFID READER**

(71) Applicant: ELATEC GmbH, 82178 Puchheim (DE)
(72) Inventor: SAMSON, Dominik, 82024 Taufkirchen (DE)
(74) Representative: Lohr, Jöstingmeier & Partner

(57) **Abstract**

A RFID reader comprises a master controller connected to a communication controller further controlling a RF frontend for driving an antenna. The master controller and the communication controller each have a protocol engine communicating with a specific secure element. The communication controller further comprises a bypass switch for bypassing the protocol from the master controller protocol engine directly to the RF frontend.

## Description

### Field of the invention

The invention relates to an electronic reader device for reading and/or writing RFID devices and to a method of reading and/or writing RFID devices.

### Description of the related art

There is a broad range of implementations of RFID transmitters and transponders, like RFID devices according to standards ISO14443, ISO15693, or proprietary implementations. These may be used in access control systems, payment systems and a broad range of NFC (Near Field Communication) applications. For reading and/or writing such transponders, RFID readers are used.

An RFID reader is disclosed in the European patent application EP 3 264 699 A1. It comprises an antenna connected to a decoder circuit for decoding a specific code of a specific communication protocol. A more complex reader is disclosed in European patent application EP 3 188 085 A1. This device is designed for an encryption, where the encryption and decryption algorithm is stored in a secure element (SE chip). This design provides a comparatively high security, as the critical encryption algorithms are contained in a specific chip to which the normal user has no access. To further increase security, a specific microcontroller may be provided - preferably by the same supplier as the SE chip - for handling communication with the SE chip. The drawback of this solution is that only communication protocols and/or encryption algorithms provided by the SE chip manufacturer may be used.

### Summary of the invention

The problem to be solved is to provide an RFID reader which is able to communicate by various protocols and/or various encryption algorithms.

The solution of the problem is described in the independent claims. Dependent claims relate to further improvements of the invention.

The RFID reader preferably comprises an application interface, a master controller, a communication controller, a RF frontend and an antenna.

The application interface connects the reader to an external application. Such an application may be an external computer or microcontroller which takes any further action upon receiving communication from an external RFID device. Specific applications may be a door lock, a printer control device, a number counter, a payment device or any other device which has a function controlled by an RFID transponder. A physical application interface may for example be a wired or a wireless network interface.

The RFID reader further comprises a master controller which is preferably connected to the application interface and may receive data via the application interface from the application or transmit data via the application interface to the application. The master controller preferably has a master control function of the RFID reader. Preferably, it has at least one second protocol engine for handling at least a second communication protocol. There may be one or multiple communication protocols which may be either read from or written into an RFID transponder. For enhancing security and/or for providing a secure encryption, the second protocol engine may be connected to a second secure element. Preferably, this second secure element is an integrated circuit separated from the master controller, but it may also be integrated with the master controller on one chip or at least into a common housing.

Furthermore, a communication controller is provided. This communication controller is preferably connected to the master controller and may receive data from the master controller or transmit data to the master controller. Furthermore, there may be a communication of control signals between the master controller and the communication controller. On the other hand, the communication controller is connected to an RF frontend which further operates an antenna connected to the RF frontend.

The communication controller comprises at least a first protocol engine for handling at least a first communication protocol. There may be multiple communication protocols which may be either read from or written into an RFID transponder. It is further preferred, if the first protocol engine is connected to a first secure element. Preferably, this first secure element is an integrated circuit separated from the master controller, but it may also be integrated with the master controller on one chip or at least into a common housing.

There may be not only one first or second secure element. Instead, there may be a plurality of first and/or second secure elements. This may be useful for providing multiple encryption algorithms and/or communication protocols.

Generally, the connections between the master controller and the at least one second secure element as well as the communication controller to the first secure element preferably are done by a wired communication if both are on the same chip, or by having a direct wire communication on a common printed circuit board where the controllers and the secure elements are placed. In an alternate embodiment, the communication may be performed via a bus or network.

To enable different communication protocols and/or different encryptions, a bypass switch is provided between the master controller and the RF frontend. This bypass switch serves to select a signal path which is either directly between the master controller and the RF frontend or via the first protocol engine of the communication controller between the master controller and the RF frontend. Therefore, depending on the selection of the bypass switch, the master controller may directly communicate with the RF frontend, or communication is further processed by the first protocol engine, thus enabling a different communication protocol and/or encryption even by the first protocol engine and/or the first secure element. The bypass switch may also be a selector switch for selecting either an input from the master controller or an input from the communication controller. The bypass switch may be controlled by the master controller sending a switch control signal. It may also be controlled by a protocol detection device and/or algorithm in the communication controller, which determines whether the protocol of data in any direction is compatible with the first protocol engine or not. In case of compatibility, data routing is done via the first protocol engine. Otherwise, the first protocol engine is bypassed.

This embodiment is especially useful if the communication controller is one part with the RF frontend. This may be the case if both are on the same chip or at least integrated into the same housing.

There may also be a bypass switch in the master controller to provide switching between the application interface and the communication controller. This bypass switch may be provided to select a signal path which is either directly between the application interface and the communication controller or via the second protocol engine of the master controller between the application interface and the communication controller. Therefore, depending on the selection of the bypass switch, the application interface may directly communicate with the communication controller, or communication is further processed by the second protocol engine, thus enabling a different communication protocol and/or encryption even by the second protocol engine and/or the second secure element. The bypass switch may also be a selector switch for selecting either an input from the master controller or an input from the communication controller. The bypass switch may be controlled by the master controller. It may also be controlled by a protocol detection device and/or algorithm in the master controller which determines, whether the protocol of data in any direction is compatible with the second protocol engine or not. In case of compatibility, data routing is done via the second protocol engine. Otherwise, the second protocol engine is bypassed.

The communication between the Antenna and the application interface may be unidirectional in either direction. It is preferred to have a bidirectional communication. In the latter case the bidirectional signal flow passes the same way, also either via a bypass switch or via a protocol engine, such that the protocol engine handles signal flow in both directions.

### Description of Drawings

In the following the invention will be described by way of example, without limitation of the general inventive concept, on examples of embodiment with reference to the drawings.
Figure 1 shows a schematic diagram of the RFID reader.
Figure 2 shows the communication controller in detail.
Figure 3 shows a flow diagram of the communication.

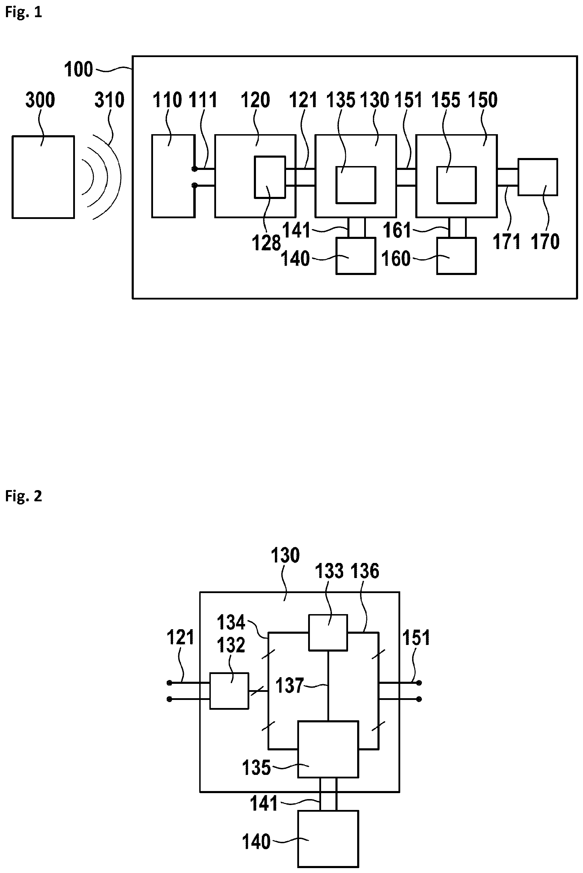

In Figure 1, an RFID reader is shown in a schematic diagram. A transponder 300 communicates via an electromagnetic field 310 with the RFID reader 100. The RFID reader 100 comprises an antenna 110 for receiving and/or transmitting an electromagnetic signal corresponding to the electromagnetic field 310. The antenna is connected via antenna connection 111 to an RF frontend 120. Such an RF frontend preferably comprises all circuitry to transmit and receive signals from an antenna and to at least one of amplify, modulate, and demodulate such signals which are generated and/or received by further electronic devices. Preferably, the RF frontend comprises a frontend microcontroller 128 which preferably controls the frontend components which may comprise digital components and/or RF components. The RF frontend is connected to a communication controller 130 by a frontend bus 121. This frontend bus comprises at least one communication line which may be a serial bus interface. There may also be multiple buses or multiple bus lines. The communication controller preferably comprises a first protocol engine 135 which generates a stream of data corresponding to at least a first protocol. Such a stream of data may be forwarded to the front end and/or be received from the front end. For secure encryption, there may be a first secure element 140 which may be connected to the communication controller and/or to the first protocol engine by a first secure element bus or the first secure element 140 may be included in the communication controller 130 and preferably in a single chip package.

The communication controller 130 is connected to a master controller 150 by a master controller bus 151. Preferably, the master controller 150 has a second protocol engine 155 for handling a second protocol which may be different from the first protocol handled by the communication controller. There may be a second secure element 160 connected via a second secure element bus 161 to the master controller and/or the second protocol engine. The second secure element 160 may be included in the master controller 150 and preferably in a single chip package The master controller has a master control function of the RFID reader and controls at least the data flow from the external application via application interface 170 which may be connected to the master controller via an application interface bus 171.

In Figure 2, the communication controller 130 is shown in detail. It comprises a first protocol engine 135 connected to a first secure element 140 by a first secure element bus 141. The first protocol engine is connected to the master controller 150 via master controller bus 151 and an internal master controller bus 136. This internal master controller bus is also connected to a bypass switch 133. The output of the first protocol engine 135 and the bypass switch 133 is fed via a frontend controller bus 134 to a frontend interface 132 which communicates via frontend bus 121 with the RF frontend 120. There may also be an internal control bus 137 between the first protocol engine 135 and the bypass switch 133. This bus may allow the first protocol engine to control the bypass switch. The data connection between the master controller 150 via master controller bus 151 and the RF frontend 120 via frontend bus 121 may either be achieved via the first protocol engine 135 and frontend interface 132, or via bypass switch 133 and frontend interface 132. It is noted that the frontend interface 132 may also be omitted, if the frontend controller bus 133 is directly connected to frontend bus 121. Instead of a common frontend controller bus 133, there may also be two discrete buses, one to the first protocol engine and another to either the bypass switch 132 or even directly to the master controller 150 via master controller bus 151. In this case it is preferred to have a selector switch to select a signal from either bus. The bypass switch 132 preferably is part of the communication controller. It may alternatively be external to the communication controller but within the RFID reader.

In this Figure, the internal structure of the communication controller 130 is shown in detail. It is obvious that a similar structure may be part of the master controller 150. In such an embodiment, the bypass switches would operate alternatingly. When the bypass switch in the master controller is open, the bypass switch in the communication controller is closed and vice versa.

The bypass switches may either be electronic switches or portions of software or code for forwarding data. The same applies to the buses shown in this Figure. These may only be flows of data in a software.

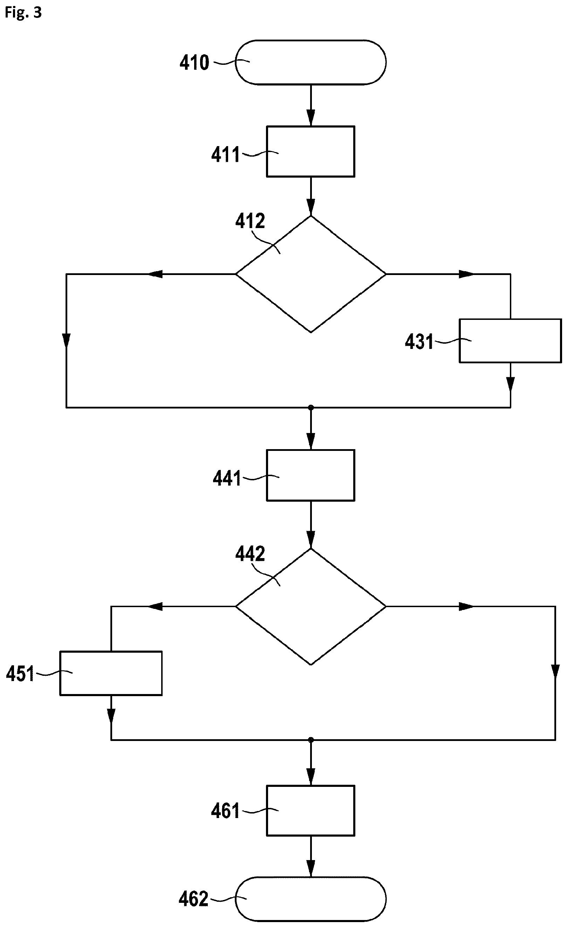

In Figure 3, a flow diagram of the communication is shown. In block 410, the flow starts. Then, a communication request is received 411 preferably by the application interface 170 form an external application. After receipt of the communication request, it is determined in box 412 whether a first or a second protocol is required. If a first protocol is required, information is directly forwarded to the communication controller. If a second protocol is required, communication is preferably encrypted and/or processed by the master controller and preferably by using the second secure element 431. The protocol is then forwarded in box 441 to the communication controller.

In box 442, the communication controller checks whether the first or the second communication protocol is required. In case of the first communication protocol, communication is preferably encrypted and/or processed by the master controller and preferably by using the second secure element 451. If the second protocol is required, communication is directly forwarded to the RF frontend in box 461. Box 462 denotes the end of the flow.

It has to be noted that normally, communication is bidirectional. Therefore, the same process may be followed in the reverse direction, when a certain signal is received from the antenna. In general, a certain communication is established and maintained at least for exchange of a frame of data. Accordingly, the process described in the diagram may be the process for establishing a bidirectional communication instead of forwarding data. When communication has been established, the status of the first or second protocol may be stored and the flow of signal may be maintained without checking the type of protocol for each frame.

### List of reference numerals

- 100: RFID reader
- 110: Antenna
- 111: Antenna connection
- 120: RF frontend
- 121: Frontend bus
- 128: Frontend microcontroller
- 130: Communication controller
- 132: Frontend interface
- 133: Bypass switch
- 134: Frontend controller bus
- 135: First protocol engine
- 136: internal master controller bus
- 137: internal control bus
- 140: First secure element
- 141: First secure element bus
- 150: Master controller
- 151: Master controller bus
- 155: Second protocol engine
- 160: Second secure element
- 161: Second secure element bus
- 170: Application interface
- 171: Application interface bus
- 300: transponder
- 310: electromagnetic field
- 410: start of flow
- 411: receive communication request by application interface
- 412: check for first/second protocol
- 431: encrypt/process request by using second secure element
- 441: forward request to communication controller
- 442: check for first/second protocol
- 451: encrypt/process request by using first secure element
- 461: forward request to RF frontend
- 462: end of flow

## Claims

1. A RFID reader (100) comprising:
- an application interface (170),
- a master controller (150) connected to the application interface (170),
- a communication controller (130) connected to the master controller (150), the communication controller (130) comprising at least a first protocol engine (135) for handling at least a first communication protocol, the first protocol engine (135) being further connected to a first secure element (140),
- a RF frontend (120) connected to the communication controller (130), and
- an antenna (110) connected to the RF frontend (120),
wherein
a bypass switch (133) is provided between the master controller (150) and the RF frontend (120) to select a signal path either directly between the master controller (150) and the RF frontend (120) or via the first protocol engine (135) between the master controller (150) and the RF frontend (120).

2. A RFID reader (100) according to claim 1,
**characterized in, that**
the master controller (150) comprises at least a second protocol engine (155) for handling at least a second communication protocol.

3. A RFID reader (100) according to claim 2,
**characterized in, that**
the second protocol engine (155) is further connected to a second secure element (160).

4. A RFID reader (100) according to any of the previous claims,
**characterized in, that**
the bypass witch (133) is controlled by a signal or command to the communication controller (130).

5. A RFID reader (100) according to any of the previous claims,
**characterized in, that**
the bypass witch (133) is controlled by the type of communication protocol.
